(19) **Europäisches Patentamt / European Patent Office / Office européen des brevets**

(11) **EP 4 413 811 B1**

(12) **EUROPEAN PATENT SPECIFICATION**

(45) Date of publication and mention
of the grant of the patent:
**10.09.2025 Bulletin 2025/37**

(21) Application number: **22790547.8**

(22) Date of filing: **29.09.2022**

(51) International Patent Classification (IPC):
*H04W 72/0446* *(2023.01)*   *H04W 74/08* *(2024.01)*
*H04W 74/04* *(2009.01)*

(52) Cooperative Patent Classification (CPC):
**H04W 74/0816;** H04W 74/002

(86) International application number:
**PCT/EP2022/077224**

(87) International publication number:
**WO 2023/057320 (13.04.2023 Gazette 2023/15)**

(54) **FIRST AND SECOND COMMUNICATION DEVICES AND METHODS**

ERSTE UND ZWEITE KOMMUNIKATIONSVORRICHTUNGEN UND VERFAHREN

PREMIER ET DEUXIÈME DISPOSITIFS DE COMMUNICATION ET PROCÉDÉS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.10.2021 EP 21200876**

(43) Date of publication of application:
**14.08.2024 Bulletin 2024/33**

(73) Proprietors:
• **Sony Group Corporation
Tokyo 108-0075 (JP)**
• **Sony Europe B.V.
Weybridge, Surrey KT13 0XW (GB)**
Designated Contracting States:
**AL**

(72) Inventors:
• **CIOCHINA-KAR, Dana
70327 Stuttgart (DE)**
• **HANDTE, Thomas
70327 Stuttgart (DE)**
• **VERENZUELA, Daniel
70327 Stuttgart (DE)**

(74) Representative: **Witte, Weller & Partner
Patentanwälte mbB
Postfach 10 54 62
70047 Stuttgart (DE)**

(56) References cited:
**WO-A1-2018/200038    US-A1- 2020 267 636
US-A1- 2021 084 667**

**Description**

BACKGROUND

FIELD OF THE DISCLOSURE

The present disclosure relates to first and second communication devices and methods that are configured to communicate with each other. The present disclosure particularly relates to an access point (AP; herein also called first communication device) and another AP or a station (STA), the other AP and the STA being herein also called second communication device, as used in a wireless communication system.

DESCRIPTION OF RELATED ART

One of the focus areas of the new developments in WLAN is latency and jitter enhancement to enable interactive applications such as gaming, jamming or industrial applications. In order to improve low latency and jitter for such wireless transmission of traffic corresponding e.g. to real time applications, the introduction of scheduling (or scheduled) intervals has been proposed. Ensuring however that the scheduling intervals are respected in the unlicensed spectrum is challenging due to a variety of factors such as contention being the default channel access mechanism, networks being mostly unmanaged and the existence of legacy stations or stations which do not support the implementation of scheduled periods. Further, such scheduling intervals, should be protected from interference.
The "background" description provided herein is for the purpose of generally presenting the context of the disclosure. Work of the presently named inventor(s), to the extent it is described in this background section, as well as aspects of the description which may not otherwise qualify as prior art at the time of filing, are neither expressly or impliedly admitted as prior art against the present disclosure.
Prior art can be found in US 2020/267636 A1, US 2021/084667 A1 and WO 2018/200038 A1.

SUMMARY

It is an object to provide a mechanism for protecting scheduling intervals from interference caused by transmissions of unscheduled communication devices. It is a further object to provide corresponding communication devices and methods as well as a corresponding computer program.
According to an aspect there is provided a first communication device as defined in the claims.
According to a further aspect there is provided a second communication device as defined in the claims.
According to still further aspects corresponding methods and a computer program comprising program means for causing a computer to carry out the steps of the methods disclosed herein, when said computer program is carried out on a computer are provided.
Embodiments are defined in the dependent claims. It shall be understood that the disclosed communication methods and the disclosed computer program have similar and/or identical further embodiments as the claimed communication devices and as defined in the dependent claims and/or disclosed herein.
One of the aspects of the disclosure is the recognition that scheduled intervals are vulnerable to disruptions from stations belonging to the same basic service set (BSS) or overlapping BSSs (OBSSs), as they may not be aware or may not be willing to respect these service periods. According to embodiments of the disclosure modifications to existing channel access methods are presented to reduce or remove the chance that stations, particularly belonging to overlapping BSSs, cause delays to the schedule interval start as well as occupy the medium during essential parts of the low latency service periods. The schemes proposed do not require cooperation or require very limited cooperation between the APs. Furthermore, the approaches are aiming at ensuring a level of fairness in the channel access to compensate for the reserved or prioritized scheduled intervals for low latency.
It shall be noted that in this disclosure the term "scheduling interval" (sometimes also called "scheduled interval") is used generically to refer to both i) a target wake up time (TWT) service period (SP), established for low latency traffic, and ii) a time interval planned at an AP for communication with a STA as a consequence of receiving a request to trigger from the respective STA. Hence, "scheduling interval" is used as the more general term, while the options i) and ii) are two possible implementations. In the following, terms like TWT SP or restricted TWT (rTWT) are both understood as implementations of the scheduling interval, which is an SP reserved for low latency (LL) traffic exchange for one or more STAs.
The foregoing paragraphs have been provided by way of general introduction, and are not intended to limit the scope of the following claims. The described embodiments, together with further advantages, will be best understood by reference to the following detailed description taken in conjunction with the accompanying drawings.

BRIEF DESCRIPTION OF THE DRAWING

A more complete appreciation of the disclosure and many of the attendant advantages thereof will be readily obtained as the same becomes better understood by reference to the following detailed description when considered in connection with the accompanying drawings, wherein:

Fig. 1      shows a diagram of a known communication scheme.

Fig. 2      shows a diagram illustrating a communication system including a first communication device, a second communication device and a third communication device according to the present disclosure.

Fig. 3      shows a flow chart of an embodiment of a first communication method of the first communication device according to the present disclosure.

Fig. 4      shows a flow chart of an embodiment of a second communication method of the second communication device according to the present disclosure.

Fig. 5      shows a diagram of a communication scheme according to an embodiment of the present disclosure, according to which the CCF is sent before the rTWT.

Fig. 6      shows a diagram of a communication scheme according to another embodiment of the present disclosure, according to which the CCF can be used to provide protection at the start of the rTWT.

Fig. 7      shows a diagram of a communication scheme according to another embodiment of the present disclosure, according to which the CCF has a duration extending beyond rTWT start.

Fig. 8      shows a diagram of a communication scheme according to another embodiment of the present disclosure using trigger based access within a CCF protected interval.

Fig. 9      shows a diagram of a communication scheme according to another embodiment of the present disclosure, according to which a TXOP for DL transmission is obtained.

Fig. 10      shows a diagram of a communication scheme according to another embodiment of the present disclosure using contention in case the STAs are capable of correctly decoding the constrained contention frame

Fig. 11      shows a diagram of a communication scheme according to another embodiment of the present disclosure using triggered access and parametrized spatial reuse (PSR) during CCF based medium reservation.

Fig. 12      shows a diagram of a communication scheme according to another embodiment of the present disclosure using CCF response.

DETAILED DESCRIPTION OF THE EMBODIMENTS

The recently introduced concept of restricted target wake up time (rTWT), which essentially introduces scheduled intervals in the unlicensed band for low latency (LL) or periodic traffic, is vulnerable or inefficient when non-scheduled stations do not understand or respect these intervals. Protection mechanisms have been proposed for the case in which stations within the basic service set (BSS) of the AP, managing the LL or periodic traffic, request a transmit opportunity which overlaps with the initially planned scheduling intervals.

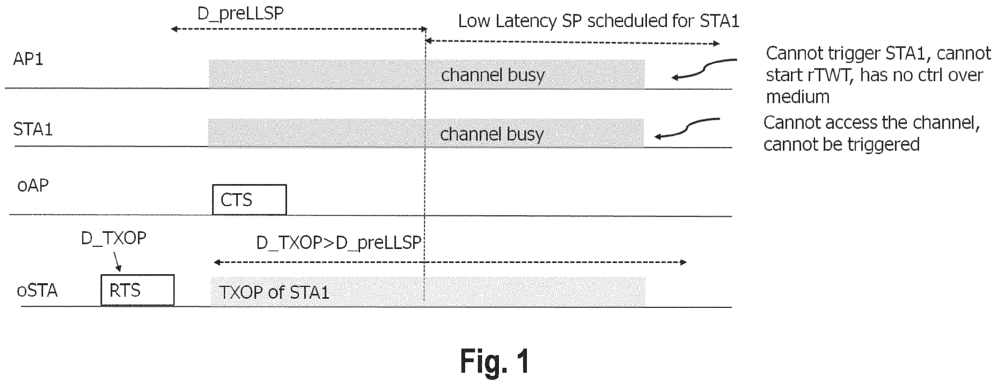

However, disruptions to the start of the LL traffic interval are expected not only due to STAs belonging to the same BSS, but also from neighboring BSSs. The problem is depicted in Fig. 1 showing a diagram of a known communication scheme. An AP1 has a planned scheduling interval to accommodate low latency traffic exchange with an associated STA depicted as STA1. A STA from an overlapping BSS (oBSS), which is referred to as overlapping STA (oSTA) in the following, sends an RTS to request a TXOP that overlaps with the planned scheduled interval (e.g., an rTWT) towards the AP of the overlapping BSS, further referred to as oAP. In case the channel is idle at the oAP, this needs to grant the requested transmit opportunity. This however leads to a delay or failure of the start of the LL traffic of the scheduled STA.

Currently there are no mechanisms to stop OBSS STAs from accessing the channel during the rTWT intervals. Quiet element operation, which prevents STAs from contending for announced time intervals, was not defined to be respected by STAs outside the BSS. Thus, extending the operation at this point would not offer any protection against legacy STAs (even if these do theoretically have the quiet element implemented).

AP1 cannot respond directly to a frame sent by a STA from a different BSS. oAP1 could potentially apply known solutions, but it is not itself the one managing the scheduling interval.

In European patent application 21169497.1 the following scenario has been considered: a STA associated to an AP, scheduling a low latency protected interval, requests to establish a TXOP, which prevents the interval from starting. The AP reacts by sending a frame (referred to as NCF) which can have one of the following functionalities: i) defer contention until start of the scheduling interval or covering an initial part of it or ii) adjust the requested TXOP duration. For both cases, additional channel access is allowed for the STA in case there is remaining time in the rTWT.

The present disclosure builds further on the idea of the NCF frame with contention deferral functionality and proposes several extensions to address the oBSS case. The information used according to the present disclosure is herein referred to as constrained contention information and the frame used according to the present disclosure is herein referred to as a constrained contention indication frame (CCF).

Firstly, the AP1 may send this frame unsolicited to prevent STAs from potentially overlapping, as opposed to sending it as a reaction to receiving a TXOP request. While this is in fact useful for both BSS as well as oBSS protection, it is particularly advantageous for the latter case, because an AP1 cannot respond directly to frames sent by OBSS STAs. Furthermore, particular care should be given to the time when the frame can be sent in order to not block the activity of neighboring BSSs for long times. A further aspect is how the CCF protected interval, created by the transmission of this frame, can be further used, in order to prevent STAs, not using virtual carrier sense (CS) from accessing the channel and rendering the method useless.

Thus, in a second step, the behavior of the frame and the channel access rules to enable the channel access of STAs which can obey the schedule, is defined. According to the disclosure of EP application 21169497.1, the interval following the NCF frame may be used by STAs from the BSS, by being triggered by the AP. The present disclosure presents rules, which allow STAs from oBSSs to also use the interval under several constraints.

A further related variant of the CCF frame presented in this disclosure has the role to protect not only the start time but also a part of the rTWT, especially in cases when the rTWT is not a trigger rTWT. The function is similar to the one in the disclosure of EP application 21169497.1: ensure that a set of STAs (e.g., STAs which are not rTWT members) is not contending while for another set of STAs (e.g., rTWT members) it is indicated that these may start decrementing their backoff counters (Bos) and access the channel. In this case the CCF is sent after the start of the rTWT, as soon as the BO counter of the AP is 0.

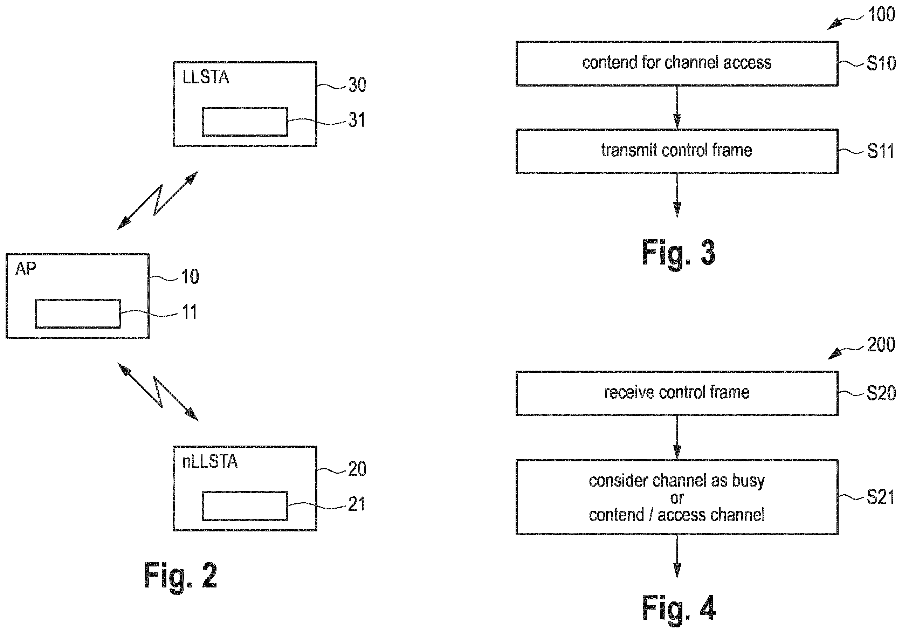

Fig. 2 shows a diagram illustrating a communication system including a first communication device 10 (herein also called access point AP) according to an aspect of the present disclosure for communicating with one (or more) third communication device(s) 30 (LL STA(s); also called scheduled STA) within a scheduling interval during which communication of the AP 10 with the one (or more) LL STA(s) (i.e., that have a membership of the scheduling interval so that they have priority to access the channel with respect to rest of the STAs that have not setup a membership) is planned. Further shown is a second communication device 20 with which communication of the AP 10 is not planned during the scheduling interval, i.e., that does not have a membership of the scheduling interval and may be a LL STA or nLL STA (also called non-scheduled STA).

The second communication device 20 may generally be:

- a legacy STA;
- a non-scheduled STA of the same BSS as the first and third communication devices;
- an STA from a different BSS than the first and third communication devices, such as an overlapping BSS (OBSS), referred to as oSTA; and
- an AP from a different BSS than the first and third communication devices, such as an OBSS, referred to as oAP.

While only two stations are shown in Fig. 2, in a practical embodiment of the system there may be more stations. The first communication device 10 is generally able to exchange (receive and/or transmit) data with the second communication device(s) 20 and the third communication device(s) 30.

Each of the communication devices 10, 20, 30 comprises circuitry 11, 21, 31 that is configured to perform particular operations. The circuitries may be implemented by a respective processor or computer, i.e., as hardware and/or software, or by dedicated units or components. For instance, respectively programmed processors may represent the respective circuitries 11, 21, 31.

Fig. 3 shows a flow chart of an embodiment of a first communication method 100 of the first communication device 10 according to the present disclosure, which may be performed by the circuitry 11. In a first step S10 the first communication device 10 contends for channel access, within an interval before the start or at the start of a scheduling interval during which communication of the first communication device with the one or more third communication devices is planned over said channel. In a second step S11 it transmits, after successful contention, a control frame initiating a constrained contention interval and including constrained contention information, the constrained contention interval representing a time period before and/or during the scheduling interval, during which second and/or third communication devices shall either consider the channel as busy or may contend and access said channel according to constrained contention information.

Fig. 4 shows a flow chart of an embodiment of a second communication method 200 of the second communication device 20 according to the present disclosure, which may be performed by the circuitry 21. In a first step S20 the second communication device 20 receives a control frame initiating a constrained contention interval and including constrained contention information from a first communication device that has planned communication over a channel with one or more third communication devices during a scheduling interval, the constrained contention interval representing a time period before and/or during the scheduling interval, during which the second communication may contend and access said channel according to constrained contention information. In a second step S21 it either considers the channel as busy or contends and accesses (after it won contention) the channel based on the constrained contention information.

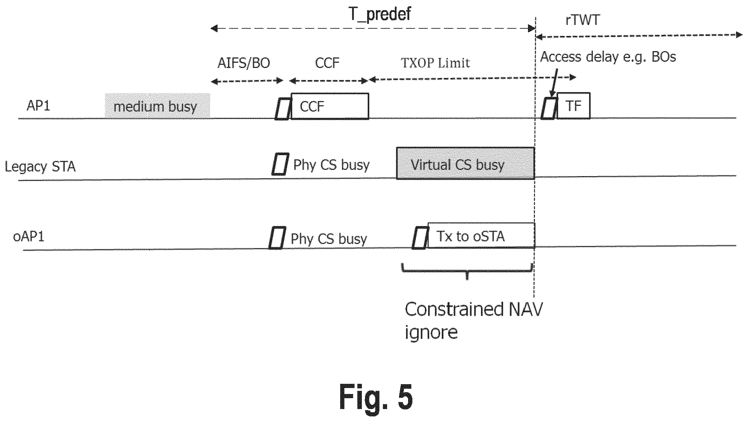

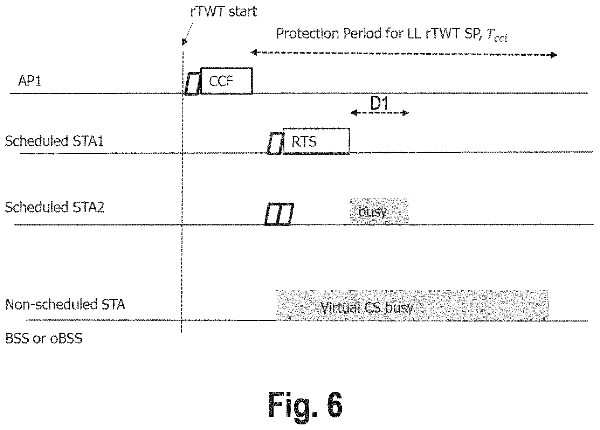

The general idea is depicted in Figs. 5 and 6. Within a predefined time interval before the start of the rTWT or at the start of the rTWT, AP1 contends for the channel to send a CCF (or, more generally, a control frame) that includes (or represents) constrained contention information. This frame contains information about the start of a low latency traffic period and starts/initiates a constrained contention interval for a duration indicated in the frame.

When the CCF frame is sent by the AP1 (the first communication device) before the rTWT start, it allows STAs (second and third communication devices), inside or outside the BSS of the AP1, to contend and access the channel, if a set of rules can be respected. When sent at the start of the rTWT, it indicates member STAs (third communication devices) to start contending for the medium while at the same time requesting other STAs (second communication devices) to keep their NAV busy (or, more generally, consider the channel as busy) for the duration of the rTWT or at least an initial part of it.

In this context, it shall be noted that a channel may be considered as (virtual) busy for instance by setting a channel indication to busy or setting a clear channel assessment indication to busy or by updating the NAV based on a strictly positive value of a duration field included in the received frame if access can be performed according to constrained contention information. The meaning of virtual busy is, however, not limited to access being performed according to constrained contention information.

Fig. 5 shows a diagram of a communication scheme according to an embodiment of the present disclosure, according to which the CCF is sent before the rTWT. Within a predefined time interval, T_predef, before the start of an rTWT, AP1 listens to the channel and tries to obtain channel access in order to send an unsolicited CCF. The duration within the header of the CCF is $T_{CCI}$ (constrained contention interval). STAs, which do not understand the frame content, should set their NAV according to the duration indicated within the Duration Field of the header $T_{CCI}$. STAs, which understand at least part of the content, may be allowed to ignore the NAV under certain conditions and access the channel according to further rules defined in the following.

The duration indicated within the CCF should not exceed a predefined threshold, e.g., a TXOP Limit. The predefined time interval T_predef is defined as follows.

$$T\_predef = AIFS + BO*SlotTime + Length(CCF) + TXOPLimit \qquad (1)$$

where AIFS is the arbitration interframe space, BO is the number of Backoff timeslots, and SlotTime is $9\mu s$ and represents the duration of one backoff slot.

From the most recent PHY.CCA idle indication, if T_predef is smaller than remaining time until start of the rTWT, denoted as $T_{ps}$, the AP may start contending for transmitting the CCF. In case AP1 wins contention, it may transmit the CCF frame containing the indication of a constrained contention interval and rTWT information.

AIFS, the interval from which the BO is chosen, and the TXOP Limit are usually dependent on the access category. To ensure that the boundary of the rTWT is not overrun, the TXOP Limit should be chosen as the maximum e.g., the one for Video traffic 4.096ms. In this case, however the number of BOs may be too large for the scheme to be effective. Thus, sending the CCF frame with adjusted access parameters may be required, e.g., transmit after PIFS (priority interframe space), or start contending after PIFS with a low CWmin (minimum contention window). A BO<2 may be necessary to increase the probability that the start of the rTWT is protected.

Note e.g. that for a BO=1, if another STA grabs the channel for video transmission, so with maximum TXOP Limit, the remaining time until the start of the rTWT from the end of the TXOP is only $9\mu s$, not allowing another STA to contend and get the channel before or at the start of the rTWT. If the termination of the TXOP is faster or a STA with a different size of the TXOP obtains the channel, the AP should still have time to transmit the CCF as its BO is then 0, as the difference between a video TXOP limit and any other AC is at least 1ms. A shorter AIFS, e.g. =1, would however help to further increase the chance of transmission.

Fig. 6 shows a diagram of a communication scheme according to another embodiment of the present disclosure, according to which the CCF can be used to provide protection at the start of the rTWT. This is especially useful in cases in which the channel access within the SP is not controlled by the AP through trigger frames but is performed by the member STAs using EDCA. In this case, a CCF is sent at the beginning of the rTWT SP to announce the start of the SP. It may have a T_cci indication smaller or equal to the length of the respective rTWT SP, indicating to non-scheduled STAs an interval during which these should not contend. Scheduled rTWT STAs for the specific SP may start contending upon receiving the rTWT indication, possibly further aided by prioritized channel access parameters.

As depicted in Fig, 6, after the RTS sent by scheduled STA1, scheduled STA2 sees the channel as busy for a duration D1. This duration is smaller than the T_CCI indication, for which legacy STAs or non-scheduled STAs see the channel as busy due to the CCF frame. by this behavior it is achieved that only the scheduled STAs contend for the channel during the specific scheduling intervals. To speed up channel access during the scheduled intervals, prioritized access parameters for these intervals may be defined, meaning e.g., the STAs may start decreasing their BO counters directly, without waiting for an AIFS. Alternatively, CA parameters such as the contention window may be smaller. The prioritization is with respect to the parameters of non-scheduled STAs.

This behavior can also be defined if the remaining duration after sending the CCF and until the start of the rTWT is too short for another STA to start a transmission, e.g., the duration is smaller than the duration of a RTS + CTS + PPDULimit+2SIFS. Then, AP1 may be allowed to send the frame with a function to defer contention for non-scheduled STAs and reserve the channel for the rTWT transmission.

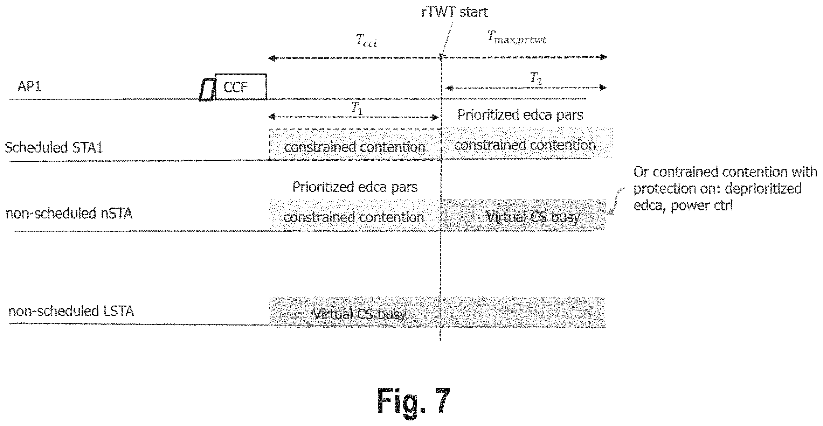

An alternative and more general implementation as the ones illustrated in Figs. 5 and 6 is illustrated in Fig. 7 showing a diagram of a communication scheme according to another embodiment of the present disclosure, according to which the CCF has a duration extending beyond rTWT start. The AP may be allowed to indicate as T_cci a duration, which exceeds the start of the rTWT. In this case, the behavior upon reception of the CCF should be as follows. STAs which understand the frame and are not scheduled in the rTWT may contend until the start of the rTWT schedule as announced in the frame and defer contention for $T_2 = T_{cci} - T_{rTWTstart}$. STAs, which neither understand the content nor are they scheduled in the rTWT, should defer contention for the whole $T_{cci}$ duration. For the scheduled STAs two possible implementations can be envisioned: i) they may defer contention until the start of the rTWT, so for a duration t_rTWTstart, or ii) they may contend with less prioritized EDCA parameters than the non-scheduled STAs.

The reason for deprioritizing the scheduled STAs in accessing the channel before the scheduling interval is that in this case better fairness can be achieved for all STAs on the medium. An example is to have the same set of prioritized channel access parameters that are used by the scheduled STAs within the rTWT part, also used by the non-scheduled STAs in the pre-rTWT interval. Additionally, the same set of deprioritized channel access parameters that are used by the non-scheduled STAs during the rTWT could be used by the scheduled STAs during the pre-rTWT intervals. For the behavior depicted in Fig. 7, $T_2$ should further be upper bounded in order to not exceed any of: the duration of the planned rTWT SP and the duration of an alternative protection mechanism defined for rTWT use (e.g., duration of a quiet element defined to protect the start of an rTWT).

In this case, the CCF is used as protection mechanism also inside the rTWT for at least an initial part of it. This implementation is however more involved and more prone to errors, given that two different behaviors are dictated by one frame transmission. For this reason, it may be easier in practice to have the two types of protection illustrated in Figs. 5 and 6 applied separately.

For the operation illustrated in Fig. 5 the CCF frame should be sent as broadcast and should have an indication of the start time of the scheduling interval. Furthermore, within the content of the frame a broadcast AID should be included to indicate that any STA could access if it can correctly decode the content of the CCF, in particular a start of the rTWT schedule and can further respect the TXOP duration constraints derived based on this information. A flag indicating the frame is a constrained contention frame with the goal of protecting scheduled intervals would also be beneficial for easing the decoding and for allowing the protection method to be effective also for STAs with limited capabilities or STAs missing part of the CCF content e.g., the scheduling interval start.

For the operation illustrated in Fig. 6, the CCF frame can be sent as broadcast but with a Group AID, which contains the AIDs of the scheduled STAs within the scheduled interval. Since the STAs are aware of the schedule, including the timing information may be only optional. Since the group AID is only containing scheduled STAs, other STAs will not contend during the interval with a duration indicated by the CCF frame. A flag indicating the frame is a constrained contention frame with the goal of protecting scheduled intervals would also be beneficial for simplifying the decoding.

EDCA parameters, in case adapted during the CCF protected period, may be optionally included in the frame body. Alternatively, these may be announced by the respective APs during beacon frames.

An optional BSS color and spatial reuse parameters may be optionally included for reasons presented in the following. Regarding the constrained contention rules, some examples will be explained.

In a first example, the APs are the ones capable of understanding the schedule within the CCF frame and thus of accessing the channel during the CCF protected period. The channel access is either for DL transmission or for enabling UL transmission via trigger. In this case, non-AP STAs require relatively limited additional capability, while still being able to use the channel.

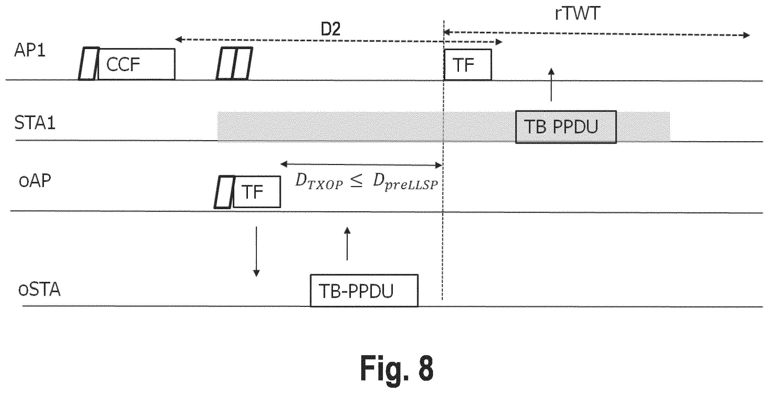

A first example is depicted in Fig. 8 showing a diagram of a communication scheme according to another embodiment of the present disclosure using trigger based access within a CCF protected interval. AP1 sends a CCF containing within the header, as regular TXOP duration, the time interval for which regular contention should not be performed. Any AP, which can correctly decode the frame, understand the start time of the scheduling interval and commit to respecting the schedule, is allowed to ignore the NAV imposed by this frame. In case the NAV is not otherwise busy (e.g., due STAs from other BSSs), the respective APs are starting contention, and in case of won contention have access to the medium. In the example shown in Fig. 8, oAP (OBSS AP) is the one who wins the medium contentions and triggers oSTA1 (OBSS STA 1) to transmit, while ensuring that the transmission of oSTA1 does not overlap with the start of the rTWT. D2 is the duration of the constrained contention interval, so of the time within which legacy STAs will see the channel busy. D2 can be defined up to the start of the rTWT or until a safe start of an rTWT (i.e., allowing a small interval which may cover necessary channel access delay of an AP or initial trigger frame transmission).

The transmission of the trigger frame can be performed with CS (carrier sense) Required Field = 0, meaning that the triggered STA may disregard the medium state and NAV in deciding whether or not to respond, thus it may respond directly to the trigger that directly addresses it. The oSTAs in this case do not need to understand the CCF like frame. They only need to be able to process trigger frames and respond to these. Thus, the scheme could apply for any HE STA.

It should be noted that having a conditional CS Required = 0 for some BSS Color to achieve e.g. a disregard NAV if set by a frame from BSS with the BSS Color of the transmitter of the CCF may be complicated because the following could happen: STA updates NAV based on CCF for duration D1, then ignores medium busy indication from a STA from different BSS with duration D2<D1 (because longer NAV has precedence). Thus, CS Required=0 for the BSS Color of CCF means STA transmission may collide with transmission of duration D2 which was ignored.

In case the oAP plans to trigger an oSTA, which has indicated capability to process a CCF frame, then it can also send the trigger with CS Required=1, to provide additional protection to STAs not associated with either AP1 nor oAP and that started a TXOP of which oSTA is aware.

Therefore, when sending the trigger frame after the CCF, the capability of the triggered STA to process the CCF frame should be considered, and the AP should adapt the CS requirements as such. This consideration also applies in case the oAP after winning contention attempts to start a TXOP for transmitting DL data to oSTA.

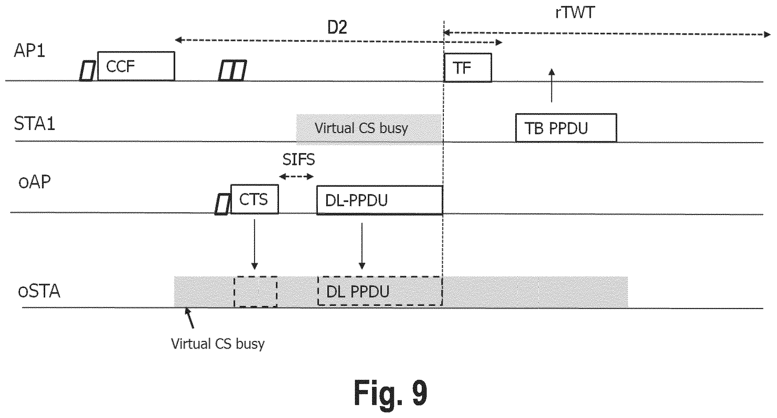

If the oSTA is not capable of understanding the CCF frame, then it will set its NAV to busy upon receipt of the CCF. This means the oAP cannot start a TXOP with a simple RTS and expect a CTS from the oSTA. Therefore, in this case a TXOP should be started by a CTS-to-self followed by a transmission directed to the oSTA, unless the intended transmission is short enough to be started without an RTS/CTS procedure. This operation is illustrated in Fig. 9 showing a diagram of a communication scheme according to another embodiment of the present disclosure, according to which a TXOP for DL transmission is obtained.

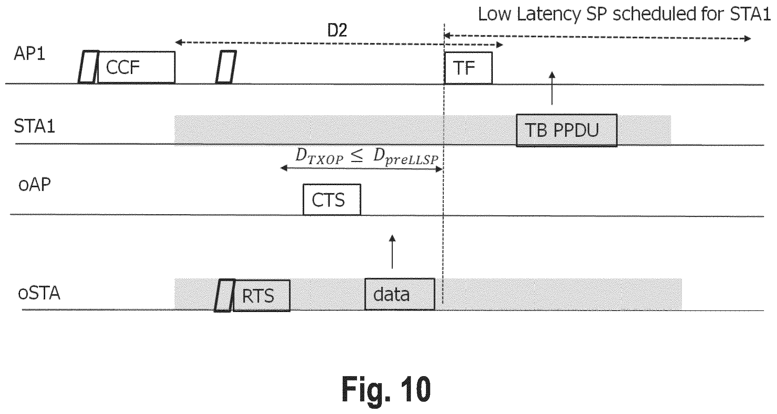

Fig. 10 shows a diagram of a communication scheme according to another embodiment of the present disclosure using contention in case STAs (including non-AP STAs) are capable of correctly understanding the content of the CCF, particularly the rTWT schedule start and accessing the medium according to the imposed constraints. Having only triggered access allowed during a CCF protected period may be a way to ensure a clean channel access, however it may be inefficient for non-AP STAs. Assuming non-AP oSTAs are capable of understanding the new frame and its functionality, then these can also be allowed to use the CCF protected periods. Thus, upon receipt of a CCF like frame, oSTA checks the duration information within the frame as well as information regarding the start of the rTWT. If the frame was correctly decoded and the oSTA can adapt its TXOP duration or frame length transmission to the required duration, then the oSTA may not update its basic NAV based on the CCF frame. If the NAV was not otherwise busy, not updating the NAV allows oSTA to start contention, with the constraints on respecting the boundary. Furthermore, in case of a successfully established transmit opportunity the STAs should keep the channel occupied until a predefined time at the start of the rTWT.

It shall be noted that the behavior described above is equally applicable to STAs belonging to the BSS of AP1.

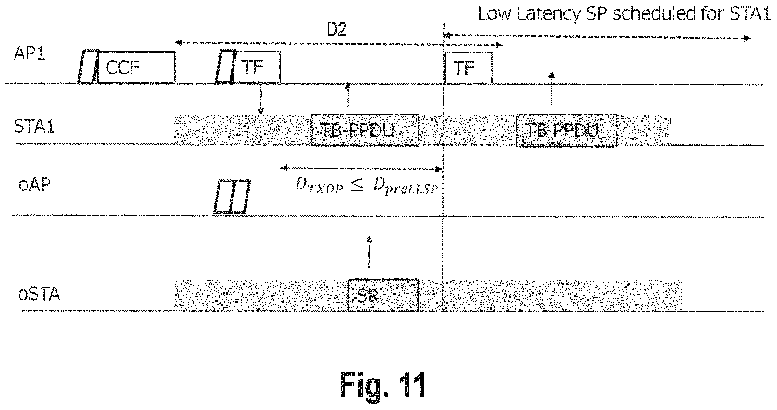

The introduction of the CCF frame enables protection of the start of the rTWT by preventing STAs from overlapping with the planned scheduled interval. However, STAs outside the BSS, which can respect spatial reuse rules, should not be constrained from using the channel in situations which are not posing a risk to the rTWT start for example if spatial reuse schemes could be used. An example is illustrated in Fig. 11 showing a diagram of a communication scheme according to another embodiment of the present disclosure using triggered access and PSR (parametrized spatial reuse) during CCF based medium reservation. AP1 wins the contention and sends a trigger frame towards one of the STAs within its BSS. The respective STA responds with a TB - PPDU as requested. If a particular type of SR is implemented at both oSTA, oAP and AP1, namely PSR, and it is allowed by both APs, oSTA can overlay its transmission on the transmission of STA1 to AP1, by adapting its transmit power to not create disturbing interference to the transmission of the TB PPDU towards the AP1. However, based on the behavior described above for the constrained contention interval, the oSTA would have the NAV busy after the reception of the CCF frame, if it is not able to completely determine the rTWT schedule. On the other hand if oSTA can apply SR, it is bounded to the medium occupancy requested by AP1. Thus, even if the oSTA is not completely decoding the rTWT schedule information, it can use the medium without disrupting the start of the rTWT. Therefore, for this case, the following lighter restrictions may be applied, in order to not restrict STAs being able to perform parameterized spatial reuse from accessing the channel during the constrained contention intervals.

In this context it shall be noted that PSR is one of the spatial reuse methods defined in IEEE 802.11ax. Based on this approach, an AP indicates within a trigger frame, tolerated levels of interference during a planned reception of a trigger based PPDU from a STA (e.g. STA1) associated with itself. Further parameters such as transmit power and spatial reuse allowed are present as part of spatial reuse parameters. Based on this information, STAs from different BSSs (e.g. oSTA) may access the channel during the same time the triggered STA1 transmits to the AP. The conditions are i) that oSTA respects transmit power derived from the spatial reuse parameters sent by the AP and ii) that the duration of the overlaid transmission does not exceed the transmission of the trigger STA, STA1.

The oSTA should perform one or more of the following steps:

- Determine the type of the CCF frame, i.e., that the CCF frame contains a schedule and constrained contention indication.
- Determine the BSS color of the BSS from which the sender of the CCF originates. This information could either be contained within the frame body of the CCF frame if this is sent in non-HE format or within the preamble in case the CCF is HE modulated.
- Correctly decode the header of the TF and determine that the PPDU was sent with Spatial Reuse Flag on and the BSS color is the same as the one used for sending the CCF.
- Verify that the PSR condition is satisfied.

If the oSTA can perform these steps and it can also set its transmit power parameters to respect the PSR condition, then the oSTA may be allowed to ignore the NAV of the CCF and transmit a frame towards the oAP, satisfying the spatial reuse constraints.

In case the implementation of the CCF frame is in HE format (e.g., in case only 6GHz spectrum used), most of the necessary information to be decoded by the oSTA would lie in the PHY preamble, with only the frame type indication as part of the MAC (and potentially the duration within the header).

Thus, according to an embodiment in which spatial reuse may be applied, a STA which correctly decodes the a Constrained Contention Flag (or any other information that indicates that a constrained contention interval follows) from a first communication device may ignore the NAV and initiate a transmission within its own BSS constrained contention information, wherein i) the transmission is overlapped with an UL transmission towards the first communication device and ii) spatial reuse parameters required by the first communication device are respected. Further, a STA which correctly decodes a Constrained Contention Flag from the first communication device but fails to decode a time information (also called second time information) that indicates the start time and/or duration of the scheduling interval, may initiate a transmission within its own BSS during the constrained contention interval only if i) the transmission is overlapped with an UL transmission towards the first communication device and ii) spatial reuse parameters required by the first communication device are respected. Hence, not all information in the CCF is needed for STAs which may use SR in order to use the channel during the constrained channel interval.

The behavior of other STAs upon reception of a CCF like frame with the function as described herein may be as follows. Legacy STAs, which cannot completely decode the frame, can at least understand the duration in the header, which indicates the medium busy for a time interval chosen to ensure a safe start of the rTWT interval. Upon receiving such a frame, they may set up the NAV as busy and may not attempt channel access for the indicated interval, thus not risking producing interference on the scheduled links and protecting the rTWT.

With respect to the duration of a TXOP within a CCF protected period it should be ensured that the medium occupancy within the CCF protected interval is long enough to prevent STAs not respecting the rTWT constraints from accessing (e.g., due to elapsing of a timeout interval from last frame sent during the CCF interval and the start of the rTWT).

To minimize the risk that the CCF sent by AP1 is not heard by all STAs which may potentially interfere with the LL transmission, the CCF may be sent as robustly as possible: e.g. using a low MCS and/or a legacy format.

Furthermore, a setup, in which oAPs respond to the CCF, can also be envisioned. The response frame can be similar to the CTS response to an MU RTS trigger. The frame contains at least a duration corresponding to the one indicated in the CCF (in particular a duration indicated within the CCF minus a SIFS minus the transmission time of the CCF response), a frame type, indicating that the frame is a response to a constrained contention indication frame and AP1 as a destination. Optionally, the start time of the schedule, i.e. T_rTWTstart, can be announced in the response. Legacy STAs in the BSSs created by the oAPs will then set their NAV to busy for the entire duration that was requested by the AP1, thus protecting the rTWT. The oAPs may further trigger oSTAs in their BSS as long as the constraints on the boundary are respected. STAs that are capable of understanding any of the CCF or the CCF response (in case this contains the schedule information), may ignore updating the NAV, however should respect the time schedule as described above. A CCF response can be applicable to both the CCF as illustrated in Figs. 5 and 6, so regardless of whether the CCF was sent before the rTWT or just at the start.

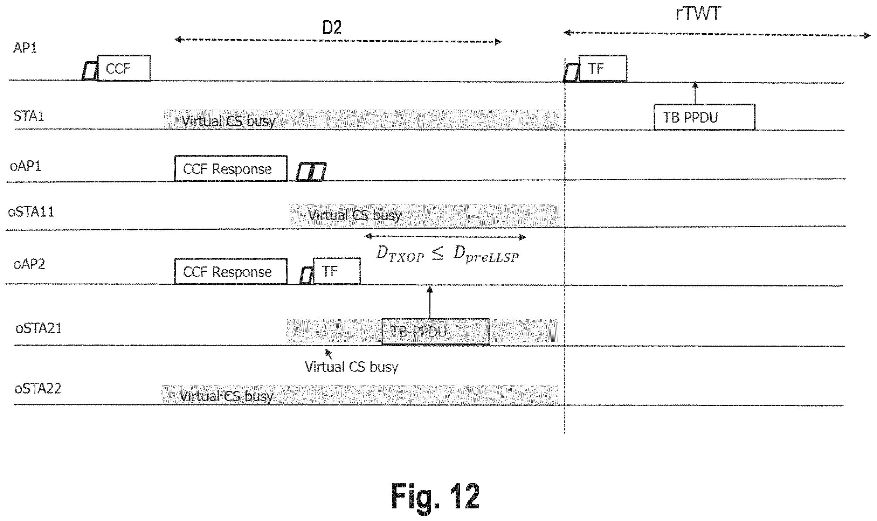

An example of the functionality with CCF is depicted in Fig. 12 showing a diagram of a communication scheme according to another embodiment of the present disclosure using CCF response. The CCF frame is heard by oSTA22, which is setting the NAV based on this. It is initially not received by oSTA11 or oSTA21. After the CCF Response from the oAPs however, both oSTAs receive the information about the medium protection. The further operation may follow one of the approaches described above. The example illustrated in Fig. 12 shows the case in which the APs control the channel access during the CCF protected period to ensure respecting the boundary. However, any of the previous approaches for the CCF protection period can be employed as well.

Parameters to be used during CCF protected interval may be as follows. During the rTWT, AP1 and the scheduled STAs may have prioritized EDCA parameters in order to increase the probability that the STAs obtain the channel access to transmit the LL traffic for which the service period was set up. To balance this, AP1 and the scheduled STAs may have deprioritized EDCA parameters during the CCF protected interval, preceding the rTWT. A similar effect can be achieved by announcing similar EDCA parameter set for channel use during the CCF protected period as during the rTWT SP. However, in the CCF protected interval it is the STAs other than the scheduled STAs that apply these parameters. This effect has been illustrated in Fig. 6.

A downgrade of the EDCA parameters for the scheduled STAs and particularly for AP1 should however be done with care to avoid leaving the medium unoccupied for too long and give the chance for STAs not respecting the rTWT to access. For example, a downgrade may be performed in case of cooperation scenarios, in which AP1 and oAP exchange information about and respect each other's schedules. Alternatively, a timeout can be introduced. After this timer elapses, AP1 may regain the channel and utilize for own purposes.

In summary, in order to improve low latency and jitter for wireless transmission of traffic corresponding to real time applications, the introduction of scheduled intervals has been proposed. However, the scheduled intervals are vulnerable to disruptions from stations belonging to the same or overlapping BSSs, as they may not be aware or may not be willing to respect these service periods. Modifications to existing channel access methods are disclosed to reduce or remove the chance of stations, particularly belonging to overlapping BSSs, from causing delays of schedule interval start as well as occupying the medium during essential parts of the low latency service periods. The disclosed schemes do not require cooperation or require very limited cooperation between the APs. Furthermore, the approaches are aiming at ensuring a level of fairness in the channel access to compensate for the reserved or prioritized scheduled intervals for low latency.

The present disclosure provides for an efficient spectrum usage in the presence of scheduling intervals and a reduced probability of channel access attempts from non-scheduled stations (oBSS STAs) within scheduled intervals to prevent timely delivery of low latency traffic. Further, it provides for reduced probability of channel access attempts from non-scheduled stations within scheduled intervals, and consequently higher probability of respecting desired low latency and jitter parameters of a low latency traffic. Still further, improved fairness in the channel access process is guaranteed.

Thus, the foregoing discussion discloses and describes merely exemplary embodiments of the present disclosure. As will be understood by those skilled in the art, the present disclosure may be embodied in other specific forms. Accordingly, the disclosure of the present disclosure is intended to be illustrative, but not limiting of the scope of the disclosure, as well as other claims. The disclosure, including any readily discernible variants of the teachings herein, defines, in part, the scope of the foregoing claim terminology such that no inventive subject matter is dedicated to the public.

In the claims, the word "comprising" does not exclude other elements or steps, and the indefinite article "a" or "an" does not exclude a plurality. A single element or other unit may fulfill the functions of several items recited in the claims. The mere fact that certain measures are recited in mutually different dependent claims does not indicate that a combination of these measures cannot be used to advantage.

In so far as embodiments of the disclosure have been described as being implemented, at least in part, by software-controlled data processing apparatus, it will be appreciated that a non-transitory machine-readable medium carrying such software, such as an optical disk, a magnetic disk, semiconductor memory or the like, is also considered to represent an embodiment of the present disclosure. Further, such a software may also be distributed in other forms, such as via the Internet or other wired or wireless telecommunication systems.

The elements of the disclosed devices, apparatus and systems may be implemented by corresponding hardware and/or software elements, for instance appropriated circuits. A circuit is a structural assemblage of electronic components including conventional circuit elements, integrated circuits including application specific integrated circuits, standard integrated circuits, application specific standard products, and field programmable gate arrays. Further a circuit includes central processing units, graphics processing units, and microprocessors which are programmed or configured according to software code. A circuit does not include pure software, although a circuit includes the above-described hardware executing software.

**Claims**

1. First communication device (10, AP) configured to operate as access point and to communicate with one or more third communication devices (30, LL STA) configured to operate as scheduled stations, the first communication device comprising circuitry (11) configured to

- contend for channel access, within an interval before the start or at the start of a scheduling interval during which communication of the first communication device with the one or more third communication devices is planned over said channel; and
- transmit, after successful contention, a control frame initiating a constrained contention interval and including constrained contention information, the constrained contention interval representing

i) a time period before the scheduling interval, during which second communication devices (20, nLL STA) configured to operate as non-scheduled or legacy stations and/or third communication devices may contend and access said channel according to the constrained contention information, or
ii) a time during the scheduling interval, during which second communication devices shall consider the channel as busy.

2. First communication device as claimed in claim 1,
wherein the circuitry is configured to include, in the control frame, one or more of

- a flag indicating that a constrained contention interval follows,
- first time information indicating a duration for which second and/or third communication devices, which are not capable of processing or correctly decoding the content of the control frame, should consider said channel as busy, in particular in a header of the control frame, the header being understandable by legacy communication devices, and/or with transmission parameter providing a robust transmission, and/or as part of the constrained contention information or as separate information, and
- second time information indicating the start time and/or duration of the scheduling interval, in particular as part of the constrained contention information or as separate information.

3. First communication device as claimed in claim 1 or 2,
wherein the circuitry is configured to contend for channel access within an interval before the start of the scheduling interval, said interval being determined based on the time required for contention, the time required for transmitting the constrained contention information, and an upper transmission opportunity, TXOP, limit.

4. First communication device as claimed in any preceding claim,
wherein the circuitry is configured to transmit the control frame via broadcast and/or to transmit the control frame before the start of the scheduling interval, the constrained contention information indicating to second and/or third communication devices if and under which conditions they may access the channel before and/or during the scheduling interval, in particular to:

- set access information, including one or more channel access, CA, parameters and/or one or more transmission opportunity, TXOP, parameters, indicating to second and/or third communication devices if and how they may access said channel during one or more of the time periods indicated by the constrained contention information, and
- transmit the access information to the one or more second and/or third communication devices.

5. First communication device as claimed in any preceding claim,
wherein the circuitry is configured to transmit the control frame at the start of the scheduling interval, the control frame indicating that one or more of the third communication devices may start contending for channel access and the second communication devices should consider the channel busy for the indicated duration, wherein the duration should preferably not exceed the duration of the scheduling interval or of another protection mechanism established for the scheduling interval.

6. First communication device as claimed in any preceding claim,
wherein the circuitry is configured to transmit third time information indicating to second and third communication devices:

- a first interval up to the start of the scheduling interval, optionally plus a tolerance margin, during which second and third communication devices are permitted to contend for channel access and to use the channel in case of a won contention, and
- a second time interval beginning with the start of the scheduling interval, during which second communication devices are either not permitted to contend for channel access or are permitted to contend for channel access using channel access, CA, parameters having a lower priority than CA parameters used by the one or more third communication devices with which communication is planned over said channel during the scheduling interval.

7. Second communication device (20, nLL STA) configured to operate as non-scheduled or legacy station and comprising circuitry (21) configured to

- receive a control frame initiating a constrained contention interval and including constrained contention information from a first communication device (10, AP) configured to operate as access point that has planned communication over a channel with one or more third communication devices (30, LL STA) configured to operate as scheduled stations during a scheduling interval, the constrained contention interval representing

i) a time period before the scheduling interval, during which second communication devices and/or third communication devices may contend and access said channel according to the constrained contention information, or
ii) a time during the scheduling interval, during which second communication devices shall consider the channel as busy, and

- either consider the channel as busy or contend and access the channel based on the constrained contention information.

8. Second communication device as claimed in claim 7,
wherein the circuitry is configured to consider said channel as busy and/or not to start contending for channel access of said channel if the constrained contention information cannot be correctly interpreted or conditions implied by the constrained contention information cannot be respected.

9. Second communication device as claimed in claim 7 or 8,
wherein the circuitry is configured to correctly decode and interpret the constrained contention information and to initiate, in case of a won contention, a transmit opportunity which stops at the start of the scheduling interval or at the start of the scheduling interval plus a tolerance margin, in particular by sending a CTS frame and the transmission of the data frame follows within as predetermined period if the other communication device is not capable of processing the constrained contention information and/or the trigger for triggering the other communication device is sent, if the other communication device is not capable of processing the constrained contention information, with a carrier sense flag setting indicating that the STA does not need to check the busy or idle status of the channel before initiating a transmission.

10. Second communication device as claimed in claim 9,
wherein the circuitry is configured, when it has won the contention, to perform one or more of

- transmitting data to another communication device,
- initiating a transmission opportunity with another communication device, and
- triggering another communication device to transmit data to the second communication device.

11. Second communication device as claimed in any one of claims 7 to 10,
wherein the circuitry is configured to transmit a contention response in response to reception of the control frame, the contention response including part of or the complete constrained contention information.

12. Second communication device as claimed in any one of claims 7 to 11,
wherein the circuitry is configured to use a spatial reuse scheme and to transmit data during one or more time periods indicated by the constrained contention information and during the transmission of another second or of a third communication device to the first device, with reduced transmit power and/or modified transmit parameters that avoid interference with the transmission from the other second communication device or the third communication device to the first communication device, and/or to perform spatial reuse if the constrained contention information is transmitted from a first communication device, allowing spatial reuse operation and at least a constrained contention flag has been correctly decoded and/or the circuitry is configured to compute the transmission opportunity, TXOP, duration based on second time information within the constrained contention information indicating the start time and/or duration of the scheduling interval.

13. First communication method of a first communication device (10, AP) configured to operate as access point and to communicate with one or more second (20, nLL STA) communication devices configured to operate as non-scheduled or legacy stations and third communication devices (30, LL STA) configured to operate as scheduled stations, the first communication method comprising

- contending for channel access, within an interval before the start or at the start of a scheduling interval during which communication of the first communication device with the one or more third communication devices is planned over said channel; and
- transmitting, after successful contention, a control frame initiating a constrained contention interval and including constrained contention information, the constrained contention interval representing

i) a time period before the scheduling interval, during which second communication devices (20, nLL STA) configured to operate as non-scheduled or legacy stations and/or third communication devices may contend and access said channel according to the constrained contention information, or
ii) a time during the scheduling interval, during which second communication devices shall consider the channel as busy.

14. Second communication method of a second communication device (20, nLL STA) configured to operate as non-scheduled or legacy station, the second communication method comprising

- receiving a control frame initiating a constrained contention interval and including constrained contention information from a first communication device (10, AP) configured to operate as access point that has planned communication over a channel with one or more third communication devices (30, LL STA) configured to operate as scheduled stations during a scheduling interval, the constrained contention interval representing

i) a time period before the scheduling interval, during which second communication devices and/or third communication devices may contend and access said channel according to the constrained contention information, or
ii) a time during the scheduling interval, during which second communication devices shall consider the channel as busy, and

- either considering the channel as busy or contending and accessing the channel based on the constrained contention information.

15. A computer program comprising program code means for causing a computer to perform the steps of said method according to claim 13 or 14 when said computer program is carried out on a computer.


**Patentansprüche**

1. Erste Kommunikationsvorrichtung (10, AP), die konfiguriert ist, um als Zugangspunkt betrieben zu werden und um mit einem oder mehreren dritten Kommunikationsvorrichtungen (30, LL STA) zu kommunizieren, die konfiguriert sind, um als geplante Stationen betrieben zu werden, die erste Kommunikationsvorrichtung umfassend eine Schaltung (11), die konfiguriert ist zum

- Konkurrieren um einen Kanalzugriff, innerhalb eines Intervalls vor dem Start oder zu dem Start eines Planungsintervalls, während dessen eine Kommunikation der ersten Kommunikationsvorrichtung mit der einen oder den mehreren dritten Kommunikationsvorrichtungen über den Kanal geplant ist; und
- Übertragen, nach erfolgreicher Konkurrenz, eines Steuerrahmens, der ein Intervall eingeschränkter Konkurrenz einleitet und Informationen zu eingeschränkten Konkurrenzen einschließt, wobei das Intervall eingeschränkter Konkurrenzen darstellt

i) eine Zeitperiode vor dem Planungsintervall, während dem zweite Kommunikationsvorrichtungen (20, nLL STA) konfiguriert sind, um als nicht geplante oder Legacy-Stationen betrieben zu werden, und/oder dritte Kommunikationsvorrichtungen gemäß den Informationen zu eingeschränkten Konkurrenzen um den Kanal konkurrieren und auf diesen zugreifen können, oder
ii) eine Zeit während des Planungsintervalls, während dem zweite Kommunikationsvorrichtungen den Kanal als belegt betrachten sollen.

2. Erste Kommunikationsvorrichtung nach Anspruch 1, wobei die Schaltung konfiguriert ist, um, in dem Steuerrahmen, eines oder mehrere einzuschließen von

- einem Flag, das angibt, dass ein Intervall eingeschränkter Konkurrenzen folgt,
- ersten Zeitinformationen, die eine Dauer angeben, für die zweiten und/oder die dritten Kommunikationsvorrichtungen, die nicht in der Lage sind, den Inhalt des Steuerrahmens zu verarbeiten oder korrekt zu decodieren, den Kanal als belegt betrachten sollten, insbesondere in einem Header des Steuerrahmens, wobei der Header von Legacy-Kommunikationsvorrichtungen verstanden wird, und/oder mit Übertragungsparametern, die eine robuste Übertragung bereitstellen, und/oder als Teil der Informationen zu eingeschränkten Konkurrenzen oder als separate Informationen, und
- zweiten Zeitinformationen, die die Startzeit und/oder die Dauer des Planungsintervalls angeben, insbesondere als Teil der Informationen zu eingeschränkten Konkurrenzen oder als separate Informationen.

3. Erste Kommunikationsvorrichtung nach Anspruch 1 oder 2,
wobei die Schaltung konfiguriert ist, um innerhalb eines Intervalls vor dem Start des Planungsintervalls um Kanalzugriff zu konkurrieren, wobei das Intervall basierend auf der Zeit, die für die Konkurrenz benötigt wird, der Zeit, die für das Übertragen der Informationen zu eingeschränkten Konkurrenzen benötigt wird, und einer Obergrenze einer Übertragungsmöglichkeit, TXOP-Obergrenze, bestimmt wird.

4. Erste Kommunikationsvorrichtung nach einem der vorstehenden Ansprüche,
wobei die Schaltung konfiguriert ist, um den Steuerrahmen per Broadcast zu übertragen und/oder den Steuerrahmen vor dem Start des Planungsintervalls zu übertragen, wobei die Informationen zu eingeschränkten Konkurrenzen zweiten und/oder dritten Kommunikationsvorrichtungen angeben, ob und unter welchen Bedingungen sie vor und/oder während des Planungsintervalls auf den Kanal zugreifen können, insbesondere um:

- Festlegen von Zugriffsinformationen, einschließlich eines oder mehrerer Kanalzugriffsparameter, CA-Parameter, und/oder eines oder mehrerer Übertragungsmöglichkeitsparameter, TXOP-Parameter, die die zweiten und/oder dritten Kommunikationsvorrichtungen angeben, ob und wie sie während einer oder mehrerer Zeitperioden, die durch die Informationen zu eingeschränkten Konkurrenzen angegeben werden, auf den Kanal zugreifen können, und
- Übertragen der Zugangsinformationen an die eine oder die mehreren zweiten und/oder dritten Kommunikationsvorrichtungen.

5. Erste Kommunikationsvorrichtung nach einem der vorstehenden Ansprüche,
wobei die Schaltung konfiguriert ist, um den Steuerrahmen zu dem Start des Planungsintervalls zu übertragen, wobei der Steuerrahmen angibt, dass eine oder mehrere der dritten Kommunikationsvorrichtungen starten können, um den Kanalzugriff zu konkurrieren, und die zweiten Kommunikationsvorrichtungen den Kanal für die angegebene Dauer als belegt betrachten sollten, wobei die Dauer vorzugsweise die Dauer des Planungsintervalls oder eines anderen Schutzmechanismus, der für das Planungsintervall eingerichtet wird, nicht überschreiten sollte.

6. Erste Kommunikationsvorrichtung nach einem der vorstehenden Ansprüche,
wobei die Schaltung konfiguriert ist, um dritte Zeitinformationen zu übertragen, die an zweiten und die dritte Kommunikationsvorrichtungen angeben:

- ein erstes Intervall bis zu dem Start des Planungsintervalls, optional zuzüglich einer Toleranzmarge, während dessen es zweiten und dritten Kommunikationsvorrichtungen erlaubt ist, um den Kanalzugriff zu konkurrieren und um den Kanal im Falle einer gewonnenen Konkurrenz zu verwenden, und
- ein zweites Zeitintervall, das mit dem Start des Planungsintervalls beginnt, während dessen zweiten Kommunikationsvorrichtungen entweder nicht erlaubt ist, um den Kanalzugriff zu konkurrieren, oder es ihnen erlaubt ist, um den Kanalzugriff unter Verwendung von Kanalzugriffsparametern, CA-Parametern, zu konkurrieren, die eine niedrigere Priorität als die CA-Parameter aufweisen, die durch die eine oder die mehreren dritten Kommunikationsvorrichtungen verwendet werden, mit denen die Kommunikation über den Kanal während des Planungsintervalls geplant ist.

7. Zweite Kommunikationsvorrichtung (20, nLL STA), die konfiguriert ist, um als nicht-planmäßige oder Legacy-Station betrieben zu werden und umfassend eine Schaltung (21), die konfiguriert ist zum

- Empfangen eines Steuerrahmens, der ein Intervall eingeschränkter Konkurrenzen einleitet und Informationen zu eingeschränkten Konkurrenzen von einer ersten Kommunikationsvorrichtung (10, AP) einschließt, die konfiguriert ist, um als Zugangspunkt betrieben zu werden und die über einen Kanal eine geplante Kommunikation mit einer oder mehreren dritten Kommunikationsvorrichtungen (30, LL STA) aufweist, die konfiguriert sind, um während eines Planungsintervalls als geplante Stationen betrieben zu werden, wobei das Intervall eingeschränkter Konkurrenzen darstellt

i) eine Zeitperiode vor dem Planungsintervall, während der zweite Kommunikationsvorrichtungen und/oder dritte Kommunikationsvorrichtungen gemäß den Informationen zu eingeschränkten Konkurrenzen um den Kanal konkurrieren und auf diesen zugreifen können, oder
ii) eine Zeit innerhalb des Planungsintervalls, während der die zweite Kommunikationsvorrichtungen den Kanal als belegt betrachten sollen, und

- den Kanal entweder als belegt oder basierend auf den Informationen zu eingeschränkten Konkurrenzen um den Kanal konkurrierend und auf diesen zugreifend zu betrachten.

8. Zweite Kommunikationsvorrichtung nach Anspruch 7,
wobei die Schaltung konfiguriert ist, um den Kanal als belegt zu betrachten und/oder nicht mit dem Konkurrieren um den Kanalzugriff zu starten, falls die Informationen zu eingeschränkten Konkurrenzen nicht richtig interpretiert werden können oder Bedingungen, die durch die Informationen zu eingeschränkten Konkurrenzen impliziert werden, nicht eingehalten werden können.

9. Zweite Kommunikationsvorrichtung nach Anspruch 7 oder 8,
wobei die Schaltung konfiguriert ist, um die Informationen zu eingeschränkten Konkurrenzen richtig zu decodieren und zu interpretieren und, im Falle einer gewonnenen Konkurrenz, eine Übertragungsmöglichkeit einzuleiten, die zu dem Start des Planungsintervalls oder zu dem Start des Planungsintervalls zuzüglich einer Toleranzmarge endet, insbesondere durch Senden eines CTS-Rahmens und die Übertragung des Datenrahmens innerhalb einer zuvor bestimmten Periode folgt, falls die andere Kommunikationsvorrichtung nicht in der Lage ist, die Informationen zu eingeschränkten Konkurrenzen zu verarbeiten und/oder der Auslöser zum Auslösen der anderen Kommunikationsvorrichtung gesendet wird, falls die andere Kommunikationsvorrichtung nicht in der Lage ist, die Informationen zu eingeschränkten Konkurrenzen zu verarbeiten, wobei eine Trägerkennung-Flag-Einstellung angibt, dass die STA den Belegt- oder Leerlaufstatus des Kanals nicht prüfen muss, bevor sie eine Übertragung einleitet.

10. Zweite Kommunikationsvorrichtung nach Anspruch 9,
wobei die Schaltung konfiguriert ist, um, wenn sie den Wettbewerb gewonnen hat, im eine oder mehrere durchzuführen von

- Übertragen von Daten an eine andere Kommunikationsvorrichtung,
- Initiieren einer Übertragungsmöglichkeit mit einer anderen Kommunikationsvorrichtung und
- Auslösen einer anderen Kommunikationsvorrichtung, um Daten an die zweite Kommunikationsvorrichtung zu übertragen.

11. Zweite Kommunikationsvorrichtung nach einem der Ansprüche 7 bis 10, wobei die Schaltung konfiguriert ist, um als Reaktion auf einen Empfang des Steuerrahmens eine Konkurrenzantwort zu übertragen, wobei die Konkurrenzantwort einen Teil oder die vollständigen Informationen zu eingeschränkten Konkurrenzen einschließt.

12. Zweite Kommunikationsvorrichtung nach einem der Ansprüche 7 bis 11, wobei die Schaltung konfiguriert ist, um ein räumliches Wiederverwendungsschema zu verwenden und um Daten während eines oder mehrerer Zeitperioden, die durch die Informationen zu eingeschränkten Konkurrenzen angegeben werden, und während der Übertragung einer anderen zweiten oder dritten Kommunikationsvorrichtung an die erste Vorrichtung mit reduzierter Übertragungsleistung und/oder modifizierten Übertragungsparametern zu übertragen, die Störungen der Übertragung von der anderen zweiten Kommunikationsvorrichtung oder der dritten Kommunikationsvorrichtung an die erste Kommunikationsvorrichtung vermeiden, und/oder um eine räumliche Wiederverwendung durchzuführen, falls die Informationen zu eingeschränkten Konkurrenzen von einer ersten Kommunikationsvorrichtung übertragen werden, was einen räumlichen Wiederverwendungsbetrieb ermöglicht und mindestens ein Flag eingeschränkter Konkurrenzen korrekt decodiert wurde, und/oder die Schaltung konfiguriert ist, um die Dauer der Übertragungsmöglichkeit, TXOP-Dauer, basierend auf zweiten Zeitinformationen innerhalb der Informationen zu eingeschränkten Konkurrenzen zu berechnen, die die Startzeit und/oder die Dauer des Planungsintervalls angeben.

13. Erstes Kommunikationsverfahren einer ersten Kommunikationsvorrichtung (10, AP), das konfiguriert ist, um als Zugangspunkt betrieben zu werden und um mit einer oder mehreren zweiten (20, nLL STA) Kommunikationsvorrichtungen, die konfiguriert sind, um als nicht geplante oder Legacy-Stationen betrieben zu werden, und dritten Kommunikationsvorrichtungen (30, LL STA) zu kommunizieren, die konfiguriert sind, um als geplante Stationen betrieben zu werden, das erste Kommunikationsverfahren umfassend

- Konkurrieren um den Kanalzugriff innerhalb eines Intervalls vor dem Start oder zu dem Start eines Planungsintervalls, während dessen die Kommunikation der ersten Kommunikationsvorrichtung mit der einen oder den mehreren dritten Kommunikationsvorrichtungen über den Kanal geplant ist; und
- Übertragen, nach erfolgreicher Konkurrenz, eines Steuerrahmens, der ein Intervall eingeschränkter Konkurrenzen einleitet und Informationen zu eingeschränkten Konkurrenzen einschließt, wobei das Intervall eingeschränkter Konkurrenzen darstellt

i) eine Zeitperiode vor dem Planungsintervall, während dem zweite Kommunikationsvorrichtungen (20, nLL STA) konfiguriert sind, um als nicht geplante oder Legacy-Stationen betrieben zu werden, und/oder dritte Kommunikationsvorrichtungen gemäß den Informationen zu eingeschränkten Konkurrenzen um den Kanal konkurrieren und auf diesen zugreifen können, oder
ii) eine Zeit während des Planungsintervalls, während der zweite Kommunikationsvorrichtungen den Kanal als belegt betrachten sollen.

14. Zweites Kommunikationsverfahren einer zweiten Kommunikationsvorrichtung (20, nLL STA), die konfiguriert ist, um als nicht geplante oder Legacy-Station betrieben zu werden, das zweite Kommunikationsverfahren umfassend

- Empfangen eines Steuerrahmens, der ein Intervall eingeschränkter Konkurrenzen einleitet und Informationen zu eingeschränkten Konkurrenzen von einer ersten Kommunikationsvorrichtung (10, AP) einschließt, die konfiguriert ist, um als Zugangspunkt betrieben zu werden, der über einen Kanal eine Kommunikation mit einer oder mehreren dritten Kommunikationsvorrichtungen (30, LL STA) geplant aufweist, die konfiguriert sind, um als geplante Stationen während eines Planungsintervalls betrieben zu werden, wobei das Intervall eingeschränkter Konkurrenzen darstellt

i) eine Zeitperiode vor dem Planungsintervall, während der zweite Kommunikationsvorrichtungen und/oder dritte Kommunikationsvorrichtungen gemäß den Informationen zu eingeschränkten Konkurrenzen um den Kanal konkurrieren und auf diesen zugreifen können, oder
ii) eine Zeit innerhalb des Planungsintervalls, während der die zweite Kommunikationsvorrichtungen den Kanal als belegt betrachten sollen, und

- den Kanal entweder als belegt oder basierend auf den Informationen zu eingeschränkten Konkurrenzen um den Kanal konkurrierend und auf diesen zugreifend zu betrachten.

15. Computerprogramm, umfassend Programmcodemittel zum Veranlassen eines Computers, die Schritte des Verfahrens nach Anspruch 13 oder 14 durchzuführen, wenn das Computerprogramm auf einem Computer ausgeführt wird.

**Revendications**

1. Premier dispositif de communication (10, AP) configuré pour fonctionner en tant que point d'accès et pour communiquer avec un ou plusieurs troisièmes dispositifs de communication (30, LL STA) configurés pour fonctionner en tant que stations ordonnancées, le premier dispositif de communication comprenant des circuits (11) configurés pour

- entrer en concurrence pour un accès à un canal, dans un intervalle précédant le début ou au début d'un intervalle d'ordonnancement au cours duquel la communication du premier dispositif de communication avec le ou les troisièmes dispositifs de communication est planifiée sur ledit canal; et
- transmettre, après une contention réussie, une trame de commande initiant un intervalle de contention restreinte et comportant des informations de contention restreinte, l'intervalle de contention restreinte représentant

i) une période de temps avant l'intervalle d'ordonnancement, pendant laquelle des deuxièmes dispositifs de communication (20, nLL STA) configurés pour fonctionner en tant que stations non ordonnancées ou existantes et/ou des troisièmes dispositifs de communication peuvent entrer en concurrence et accéder audit canal en fonction des informations de contention restreinte, ou

ii) une période de l'intervalle d'ordonnancement pendant laquelle des seconds dispositifs de communication doivent considérer le canal comme occupé.

2. Premier dispositif de communication selon la revendication 1, dans lequel les circuits sont configurés pour comporter, dans la trame de commande, un ou plusieurs parmi

- un marqueur indiquant qu'un intervalle de contention restreinte suit,
- des premières informations temporelles indiquant une durée pendant laquelle des deuxièmes et/ou troisièmes dispositifs de communication, qui ne sont pas capables de traiter ou de décoder correctement le contenu de la trame de commande, doivent considérer ledit canal comme occupé, en particulier dans un en-tête de la trame de commande, l'en-tête étant compréhensible par les dispositifs de communication existants, et/ou avec un paramètre de transmission assurant une transmission robuste, et/ou en tant qu'informations de contention restreinte ou en tant qu'informations distinctes, et
- des secondes informations temporelles indiquant l'heure de début et/ou la durée de l'intervalle d'ordonnancement, notamment dans le cadre des informations de contention restreinte ou en tant qu'informations distinctes.

3. Premier dispositif de communication selon la revendication 1 ou 2,
dans lequel les circuits sont configurés pour entrer en concurrence pour un accès au canal dans un intervalle précédant le début de l'intervalle d'ordonnancement, ledit intervalle étant déterminé en fonction du temps nécessaire à la contention, du temps nécessaire à la transmission des informations de contention restreinte et d'une limite supérieure d'opportunité de transmission, TXOP.

4. Premier dispositif de communication selon l'une quelconque revendication précédente,
dans lequel les circuits sont configurés pour transmettre la trame de commande par diffusion et/ou pour transmettre la trame de commande avant le début de l'intervalle d'ordonnancement, les informations de contention restreinte indiquant aux deuxièmes et/ou troisièmes dispositifs de communication si et dans quelles conditions ils peuvent accéder au canal avant et/ou pendant l'intervalle d'ordonnancement, en particulier pour:

- définir des informations d'accès, y compris un ou plusieurs paramètres d'accès au canal, CA, et/ou un ou plusieurs paramètres d'opportunité de transmission, TXOP, indiquant aux deuxièmes et/ou troisièmes dispositifs de communication si et comment ils peuvent accéder audit canal pendant une ou plusieurs des périodes de temps indiquées par les informations de contention restreinte, et
- transmettre les informations d'accès au ou aux deuxièmes et/ou troisièmes dispositifs de communication.

5. Premier dispositif de communication selon l'une quelconque revendication précédente,
dans lequel les circuits sont configurés pour transmettre la trame de commande au début de l'intervalle d'ordonnancement, la trame de commande indiquant qu'un ou plusieurs des troisièmes dispositifs de communication peuvent commencer à entre en concurrence pour un accès au canal et que les deuxièmes dispositifs de communication doivent considérer le canal comme occupé pour la durée indiquée, dans lequel la durée ne doit de préférence pas dépasser la durée de l'intervalle d'ordonnancement ou d'un autre mécanisme de protection mis en place pour l'intervalle d'ordonnancement.

6. Premier dispositif de communication selon l'une quelconque revendication précédente,
dans lequel les circuits sont configurés pour transmettre des troisièmes informations temporelles aux deuxièmes et troisièmes dispositifs de communication:

- un premier intervalle jusqu'au début de l'intervalle d'ordonnancement, éventuellement augmenté d'une marge de tolérance, pendant lequel les deuxièmes et troisièmes dispositifs de communication sont autorisés à entrer en concurrence pour un accès au canal et à utiliser le canal en cas de contention gagnée, et
- un second intervalle de temps commençant au début de l'intervalle d'ordonnancement, pendant lequel des deuxièmes dispositifs de communication ne sont pas autorisés à entrer en concurrence pour un accès au canal ou sont autorisés à entrer en concurrence pour un accès au canal à l'aide de paramètres d'accès au canal, CA, ayant une priorité inférieure à des paramètres CA utilisés par le ou les troisièmes dispositifs de communication avec lesquels une communication est planifiée sur ledit canal pendant l'intervalle d'ordonnancement.

7. Deuxième dispositif de communication (20, nLL STA) configuré pour fonctionner en tant que station non ordonnancée ou existante et comprenant des circuits (21) configurés pour

- recevoir une trame de commande initiant un intervalle de contention restreinte et comportant des informations de contention restreinte d'un premier dispositif de communication (10, AP) configuré pour fonctionner en tant que point d'accès ayant planifié une communication sur un canal avec un ou plusieurs troisièmes dispositifs de communication (30, LL STA) configurés pour fonctionner en tant que stations ordonnancées pendant un intervalle d'ordonnancement, l'intervalle de contention restreinte représentant

   i) une période de temps précédant l'intervalle d'ordonnancement, pendant laquelle des deuxièmes dispositifs de communication et/ou des troisièmes dispositifs de communication peuvent entrer en concurrence et accéder audit canal en fonction des informations de contention restreinte, ou
   ii) une période de l'intervalle d'ordonnancement pendant laquelle des deuxièmes dispositifs de communication doivent considérer le canal comme occupé, et

- soit considérer le canal comme occupé, soit entrer en concurrence et accéder au canal sur la base des informations de contention restreinte.

8. Deuxième dispositif de communication selon la revendication 7, dans lequel les circuits sont configurés pour considérer ledit canal comme occupé et/ou pour ne pas commencer à entrer en concurrence pour un accès de canal audit canal si les informations de contention restreinte ne peuvent pas être correctement interprétées ou si les conditions impliquées par les informations de contention restreinte ne peuvent pas être respectées.

9. Deuxième dispositif de communication selon la revendication 7 ou 8, dans lequel les circuits sont configurés pour décoder et interpréter correctement les informations de contention restreinte et pour initier, en cas de contention gagnée, une opportunité de transmission qui s'arrête au début de l'intervalle d'ordonnancement ou au début de l'intervalle d'ordonnancement augmenté d'une marge de tolérance, notamment par l'envoi d'une trame CTS et la transmission de la trame de données qui suit dans une période prédéterminée si l'autre dispositif de communication n'est pas capable de traiter les informations de contention restreinte et/ou le déclencheur pour déclencher l'autre dispositif de communication est envoyé, si l'autre dispositif de communication n'est pas capable de traiter les informations de contention restreinte, avec un réglage de marqueur de détection de porteuse indiquant que la STA n'a pas besoin de vérifier l'état occupé ou inactif du canal avant d'initier une transmission.

10. Deuxième dispositif de communication selon la revendication 9, dans lequel le circuit est configuré, lorsqu'il a gagné la contention, pour effectuer un ou plusieurs parmi

   - la transmission de données vers un autre dispositif de communication,
   - l'initiation d'une opportunité de transmission avec un autre dispositif de communication, et
   - le déclenchement d'un autre dispositif de communication pour transmettre des données au deuxième dispositif de communication.

11. Deuxième dispositif de communication selon l'une quelconque des revendications 7 à 10, dans lequel les circuits sont configurés pour transmettre une réponse de contention en réponse à la réception de la trame de commande, la réponse de contention comportant une partie ou la totalité des informations de contention restreinte.

12. Deuxième dispositif de communication selon l'une quelconque des revendications 7 à 11, dans lequel les circuits sont configurés pour utiliser un schéma de réutilisation spatiale et pour transmettre des données pendant une ou plusieurs périodes de temps indiquées par les informations de contention restreinte et pendant la transmission d'un autre deuxième ou d'un troisième dispositif de communication vers le premier dispositif, avec une puissance d'émission réduite et/ou des paramètres d'émission modifiés qui évitent les interférences avec la transmission de l'autre deuxième dispositif de communication ou du troisième dispositif de communication vers le premier dispositif de communication, et/ou pour effectuer une réutilisation spatiale si les informations de contention restreinte sont transmises à partir d'un premier dispositif de communication, permettant un fonctionnement en réutilisation spatiale et qu'au moins un marqueur de contention restreinte a été correctement décodé et/ou les circuits sont configurés pour calculer la durée d'opportunité de transmission, TXOP, sur la base des secondes informations temporelles à l'intérieur des informations de contention restreinte indiquant l'heure de début et/ou la durée de l'intervalle d'ordonnancement.

13. Premier procédé de communication d'un premier dispositif de communication (10, AP) configuré pour fonctionner en tant que point d'accès et pour communiquer avec un ou plusieurs deuxièmes dispositifs de communication (20, nLL STA) configurés pour fonctionner en tant que stations non ordonnancées ou existantes et des troisièmes dispositifs de communication (30, LL STA) configurés pour fonctionner en tant que stations ordonnancées, le premier procédé de communication comprenant

- la contention pour un accès au canal, dans un intervalle précédant le début ou au début d'un intervalle d'ordonnancement au cours duquel la communication du premier dispositif de communication avec le ou les troisièmes dispositifs de communication est planifiée sur ledit canal; et
- la transmission, après une contention réussie, une trame de commande initiant un intervalle de contention restreinte et comportant des informations de contention restreinte, l'intervalle de contention restreinte représentant

i) une période de temps avant l'intervalle d'ordonnancement, pendant laquelle des deuxièmes dispositifs de communication (20, nLL STA) configurés pour fonctionner en tant que stations non ordonnancées ou existantes et/ou des troisièmes dispositifs de communication peuvent entrer en concurrence et accéder audit canal en fonction des informations de contention restreinte, ou
ii) une période de l'intervalle d'ordonnancement pendant laquelle des seconds dispositifs de communication doivent considérer le canal comme occupé.

14. Second procédé de communication d'un deuxième dispositif de communication (20, nLL STA) configuré pour fonctionner en tant que station non ordonnancée ou existante, le second procédé de communication comprenant

- la réception d'une trame de commande initiant un intervalle de contention restreinte et comportant des informations de contention restreinte provenant d'un premier dispositif de communication (10, AP) configuré pour fonctionner en tant que point d'accès ayant planifié une communication sur un canal avec un ou plusieurs troisièmes dispositifs de communication (30, LL STA) configurés pour fonctionner en tant que stations ordonnancées au cours d'un intervalle d'ordonnancement, l'intervalle de contention restreinte représentant

i) une période de temps précédant l'intervalle d'ordonnancement, pendant laquelle des deuxièmes dispositifs de communication et/ou des troisièmes dispositifs de communication peuvent entrer en concurrence et accéder audit canal en fonction des informations de contention restreinte, ou
ii) une période de l'intervalle d'ordonnancement pendant laquelle des deuxièmes dispositifs de communication doivent considérer le canal comme occupé, et

- soit considérer le canal comme occupé, soit entrer en concurrence et accéder au canal sur la base des informations de contention restreinte.

15. Programme informatique comprenant un moyen de code de programme amenant un ordinateur à effectuer les étapes dudit procédé selon la revendication 13 ou 14 lorsque ledit programme informatique est réalisé sur un ordinateur.

Fig. 1

EP 4 413 811 B1

LLSTA — 30
— 31

AP — 10
— 11

nLLSTA — 20
— 21

**Fig. 2**

100

| contend for channel access | S10 |

| transmit control frame | S11 |

**Fig. 3**

200

| receive control frame | S20 |

| consider channel as busy<br>or<br>contend / access channel | S21 |

**Fig. 4**

Fig. 5

**Fig. 6**

rTWT start

$T_{cci}$      $T_{max,prtwt}$

AP1     CCF

$T_2$

$T_1$

Prioritized edca pars

Scheduled STA1    constrained contention | constrained contention

Or contrained contention with protection on: deprioritized edca, power ctrl

Prioritized edca pars

non-scheduled nSTA    constrained contention | Virtual CS busy

non-scheduled LSTA    Virtual CS busy

**Fig. 7**

EP 4 413 811 B1

**Fig. 8**

Fig. 9

**Fig. 10**

Fig. 11

**Fig. 12**

**EP 4 413 811 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2020267636 A1
- US 2021084667 A1
- WO 2018200038 A1
- EP 21169497